# EUROPEAN PATENT APPLICATION

(11) **EP 2 124 316 A1**
(43) Date of publication of application: **25.11.2009**
(21) Application number: 08765088.3
(22) Date of filing: 04.06.2008
(51) Int. Cl.: H02K 1/27, H02K 7/14

(54) **ELECTRIC PUMP ROTOR AND ELECTRIC PUMP**

(30) Priority: 12.06.2007 JP 2007155391
(71) Applicant: Aisin Seiki Kabushiki Kaisha, Kariya-shi, Aichi 448-8650 (JP)
(72) Inventor: ISHIGURO, Motohisa, Kariya-shi Aichi 448-8650 (JP); KAMIYA, Naoki, Kariya-shi Aichi 448-8650 (JP); ARAKI, Takahiro, Otake-shi Hiroshima 739-0652 (JP); NAKAI, Katsumi, Otake-shi Hiroshima 739-0652 (JP)
(74) Representative: Kramer - Barske - Schmidtchen
(86) International application number: PCT/JP2008/060275
(87) International publication number: WO 2008/152957

(57) **Abstract**

Provided is an electric pump rotor having a light-weight magnet unit which can be easily manufactured. The magnet unit is a multi-pole anisotropic magnet formed in a ring shape in which N-poles and S-poles alternately appear in the circumferential direction. The inner circumferential portion of the magnet unit is formed in a polygonal shape having corners at magnetism concentration positions where magnetism is concentrated in the circumferential direction of the magnet unit.

## Description

### Technical Field

The present invention relates to an electric pump rotor having a ring-shaped magnet part with polar anisotropy in which north and south poles alternatley appear in a circumferential direction.

### Background Art

The above-described electric pump rotor in general has a ring-shaped rotary part fitted onto a rotary shaft and a ring-shaped magnet part fitted onto the rotary part, and is configured to rotate uniformly with the rotary shaft. The magnet part has polar anisotropy in which north and south poles alternately appear in a circumferential direction and a line of magnetism is in a shape of an arc that enters an outer periphery and exits from the outer periphery.

In the conventional electric pump rotor, the magnet part is in a cylindrical shape, each of whose inner periphery and outer periphery has a circular cross-section (see, for example, Patent Document 1).
There can be also mentioned a rotor having a cylindrical magnet part in which an arc portion of the cross-section of the inner periphery corresponding to a middle portion between the north pole and the south pole is swelled inward (to form a curvature or flat line) (see, for example, Patent Document 2).
In addition, in another conventional electric pump rotor, a mgantet part is formed of a plurality of permanent magnets each having an arc-shaped inner periphery and an arc-shaped outer periphery with radii differing between the inner periphery and the outer periphery, and the permanent magnets are arranged in a circumferential direction while the inner periphery of each of the permanent magnets is brought into contact with a rotary shaft (see, for example, Patent Document 3).
Patent Document 1: Japanese Patent Application JP2007-32370A
Patent Document 2: Japanese Patent Application JP2005-237047A
Patent Document 3: Japanese Patent Application JP2003-124019A

### Summary of Invention

In the above-described electric pump rotors, when a ratio of the volume of the magnet part (suction part) to the total volume of the rotor is large, it is difficult to reduce the weight and production cost of the electric pump rotor. Especially, in the electric pump rotor, a material for the magnet part is costly, and thus there has been a demand for a reduction in the weight of the magnet part. Accordingly, a method has been proposed in which portions (e.g., bearing and impeller) of the rotor other than the suction part (magnet part) is made of a material different from that of the suction part (magnet part).

In the electric pump rotor described in Patent Document 1, the magnet part is formed in a cylindrical shape. Accordingly, by making the inner diametner larger so as to make the magnet part thinner in a radial direction, the weight of the magnet part can be reduced. However, if the magnet part is made thinner in the radial direction, a flux content decreases by that amount, and there arises a disadvantage that a level of magnetism required for the electric pump rotor cannot be secured. Therefore, it is difficult to reduce the weight of the magnet part in the rotor described in Patent Document 1.

In the electric pump rotor described in Patent Document2, the arc portion of the cross-section of the inner periphery of the cylindrical magnet part corresponding to a middle portion between the north pole and the south pole protrudes inward. Therefore, as compared with the cylindrical magnet part described in Patent Document 1, a radial thickness is larger by that protruding amount. For this reason, the weight of the magnet part in Patent Document 2 is larger than that in Patent Document 1.

In the electric pump rotor described in Patent Document 3, since the magnet part is formed of a plurality of permanent magnets arranged in a circumferential direction, it is easy to create space between the permanent magnets, or between the permanent magnet and the rotary shaft, and thus the weight of the magnet part can be reduced as compared with that described in Patent Document 1. However, since the magnet part is formed while arranging a plurality of the permanent magnets in a circumferential direction, it requires working operations to fix the plurality of the permanent magnets and the rotary shaft, as well as working operations to fix the permanent magnets to one another. Furthermore, each working opeartion for fixing requires accuracy. Therefore, in the rotor described in Patent Document 3, the formation of the magnet part is so difficult that a large amount of labor is required, leading to poor productivity.

The present invention is made with the view toward solving the above-mentioned problems, and the object of the present invention is to provide an electric pump rotor in which a magnet part can be easily made and at the same time the weight of the magnet part can be reduced.

The electric pump rotor according to the present invention for attaining the above-described object is **characterized in that** it includes a ring-shaped magnet part with polar anisotropy in which north and south poles alternately appear in a circumferential direction, and a cross-section of an inner periphery of the magnet part is formed in a polygonal shape whose corner portions are positioned at magnetism concentration portions where magnetism is concentrated in a circumferential direction of the magnet part.

Since the magnet part has polar anisotropy in which the north and south poles alternately appear in the circumferential direction, the line of magnetism is in a shape of an arc from a north pole in the outer periphery of the magnet part to a south pole in the outer periphery of the magnet part which is adjacent to the north pole in the circumferential direction. In the circumferential direction of the magnet part, the central region of the north pole and the central region of the south pole correspond to the magnetism concentration portions. In the magnetism concentration portion, the flux content is smaller on an inner periphery side of the magnet part, while the flux content is larger on an outer periphery side of the magnet part. Therefore, by forming a cross-section of the inner periphery of the magnet part in a polygonal shape whose corner portions are positioned at portions with a smaller flux content in the magnetism concentration portions, such a portion with a smaller flux content can be reduced. Accordingly, the weight of the magnet part can be reduced while suppressing the decrease in the flux content. Upon forming the magnet part, it suffices that the inner periphery is simply formed in a polygonal shape whose corner portions are positioned at the magnetism concentration portions, and thus the magnet part can be easily formed.
In this manner, the electric pump rotor can be provided in which the magnet part can be easily made and at the same time the weight of the magnet part can be reduced.

In the present invention, it would be preferable that the magnet part is made of a resin material containing magnetic particles, the rotor further includes a rotary part made of resin formed by injection molding so as to be fitted into the magnet part, and each corner portion of the polygonal shape is formed in a shape of an arc which has a center on an inner side of the magnet part and whose ends are contiguous to two sides of the polygonal shape adjacent to the corner portion.

When the magnet part and rotary part of the electric pump rotor are made of resin, the electric pump rotor can be made by injection molding in which resins are two-color molded, and thus productibity can be improved.
When the magnet part and rotary part are made of resin, the magnet part and the rotary part are fixed by resin welding, and thus the fastening force may be weak. However, the cross-section of the inner periphery of the magnet part is formed in a polygonal shape, and the cross-section of the outer periphery of the rotary part fitted into the magnet part is also formed in a polygonal shape, and thus the outer periphery of the rotary part and the inner periphery of the magnet part engage with each other. With this engagement, whirling of the magnet part in the rotational direction relative to the rotary part can be prevented, and decrease in a fastening force between the magnet part and the rotary part can be suppressed.

When the cross-section of the inner periphery of the magnet part is formed in a polygonal shape, and the outer periphery of the rotary part fitted into the magnet part is also formed in a polygonal shape, the portions in the rotary part corresponding to the corner portions of the polygonal shape are thicker than the remaining portions. Since the magnet part and the rotary part are made of resin, if the thicknesses in the rotary part differ to a large degree between the portions corresponding to the corner portions of the polygonal shape and the remaining portions, the rotary part is likely to be affected by resin shrinkage due to difference in cooling speed during molding caused by the difference in resin thickness, and as a result, it becomes difficult to make the rotary part with high accuracy. If the cross-section of the inner periphery of the rotary part cannot be formed in a precise circule, rattling may occur between the inner periphery of the rotary part and the outer periphery of the rotary shaft, when the rotary part rotates. As a result, not only noise or vibration may be generated, but also uneven abrasion of the rotary shaft may occur.
Accordingly in the present invention, in the cross-section of the inner periphery of the magnet part, each corner portion of the polygonal shape is formed in a shape of an arc whose ends are contiguous to two sides of the polygonal shape adjacent to the corner portion. In this manner, shrinkage is suppressed which may otherwise be generated when the magnet part and the rotary part are made of resin and the thicknesses in the rotary part differ to a large degree between the portions corresponding to the corner portions of the polygonal shape and the remaining portions due to difference in cooling conditions. Therefore, while obtaining an advantage of light weight by making the magnet part and the rotary part with resin, inconveniences, that may otherwise be caused by the fact that the magnet part and the rotary part are made of resin, can be suppressed.

In the present invention, it would be preferable that a distance from a gravity center of the polygonal shape to a middle portion of each side of the polygonal shape is set above 5 mm, and a radius of the arc in the corner portion of the polygonal shape is set to 5 mm or less.

Each corner portion of the polygonal shape is formed in an arc shape having a radius of not more than 5 mm, which 5 mm is a distance from a gravity center to a middle portion of each side of the polygonal shape. Accordingly, while preventing a large difference in thickness in the circumferential direction between the magnet part and the rotary part, the weight of the magnet part can be surely reduced, and moreover, the whirl-stop strength between the magnet part and the rotary part can be secured.

In the present invention, it would be preferable that the cross-section of the inner periphery of the magnet part is formed in a polygonal shape having the same number of the corner portions as the number of the magnetism concentration portions.

Since the corner portion is present at every magnetism concentration portion, a portion with a smaller flux content can be reduced at each magnetism concentration portion. Therefore, a reducible portion in the magnet part can be made as large as possible, and accordingly, the weight of the magnet part can be more efficiently reduced while suppressing the decrease in the flux content.

In the present invention, it would be preferable that the magnetism concentration portion is positioned at central regions of the north pole and the south pole in a circumferential direction of the magnet part. It would also be preferable that a cross-section of an outer periphery of the magnet part is formed in a circular shape. It would still be preferable that a cross-section of an outer periphery of the rotary part is formed in a polygonal shape.

The electric pump according to the present invention for attaining the above-described object is **characterized in that** it includes a suction port configured to take in a fluid; a discharge port configured to discharge the fluid taken in from the suction port; a fluid chamber communicating the suction port to the discharge port; and a rotor including a ring-shaped magnet part with polar anisotropy in which north and south poles alternately appear in a circumferential direction, and an impeller which is provided in the fluid chamber and is configured to rotate uniformly with the magnet part, a cross-section of an inner periphery of the magnet part being formed in a polygonal shape whose corner portions are positioned at magnetism concentration portions where magnetism is concentrated in a circumferential direction of the magnet part.

By forming a corss-section of the inner periphery of the magnet part in a polygonal shape whose corner portions are positioned at portions with a smaller flux content in the magnetism concentration portions, such a portion with a smaller flux content can be reduced. Accordingly, the weight of the magnet part can be reduced while suppressing the decrease in the flux content. Since the weight of the magnet part can be reduced in this manner, the weight of the electric pump having such a rotor can be also reduced.

### Brief Description of Drawings

Fig. 1 is a cross-section of a fluid pump.
Fig. 2 is a cross-section of a rotor.
Fig. 3 is a plan view of a magnet part and a rotary part.
Fig. 4 is a plan veiw of the magnet part and the rotary part.
Fig. 5 is a plan view of the magnet part.
Fig. 6 is a graph showing relationships between magnet weight and total flux content, for the magnet part of the present invention and a magnet part of the prior art.
Fig. 7 is a graph showing relationships between magnet weight and total flux content, for the magnet part of the present invention, the magnet part of the prior art and the magentic part of Comparative Example.
Fig. 8 is a graph showing changes in both flux content per gram of magnet and roundness of an inner periphery of the magnet part, when a radius of an arc-shaped corner portion is changed.
Fig. 9 is a graph showing changes in both thickness ratio of the rotary part and roundness of the inner periphery of the magnet part, when the radius of the arc-shaped corner portion is changed.

### Description of Embodiments

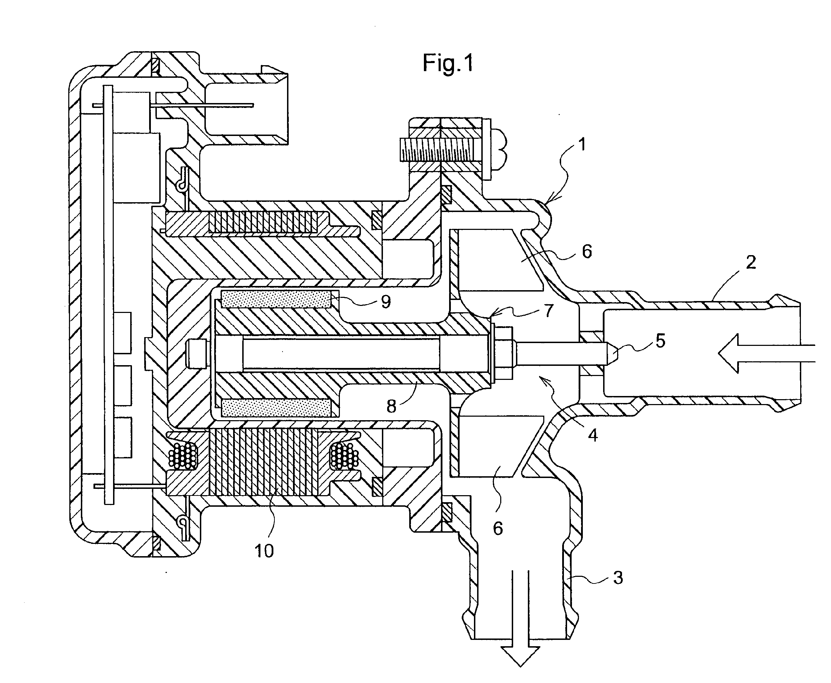

An embodiment in which an electric pump rotor according to the present invention is applied to a fluid pump will be described below with reference to the drawings.
As shown in Fig. 1, the fluid pump includes a housing 1 having a suction port 2, a discharge port 3, and a fluid chamber 4 communicating the suction port 2 to the discharge port 3. In the fluid chamber 4, a rotary shaft 5 and an impeller 6 configured to rotate uniformly are provided. The fluid pump is configured to take in a fluid from the suction port 2 into the fluid chamber 4, and to discharge the fluid from the fluid chamber 4 to the discharge port 3, utilizing the rotation of the impeller 6.

The housing 1 is, for example, formed of three members connected together with bolts or the like.
The rotary shaft 5 is configured to be inserted into a hole formed in a cener core portion of a rotor 7, and both end portions of the rotary shaft 5 are rotatably supported by the housing 1. The rotor 7 is configured to rotate uniformly with the rotary shaft 5. This rotor 7 corresponds to the electric pump rotor of the present invention.

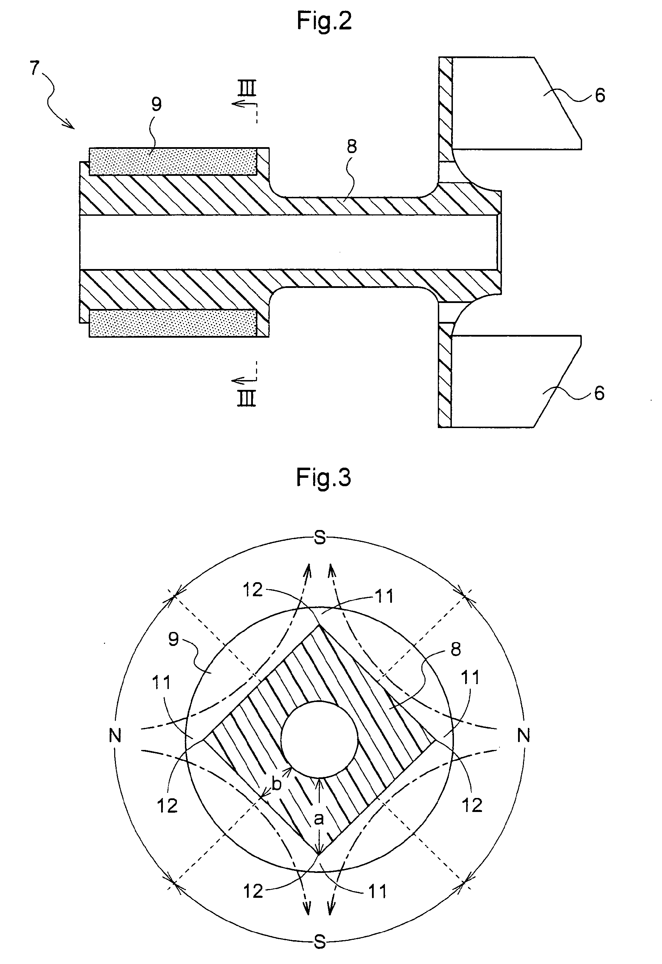

As shown in Fig. 2, the rotor 7 is formed of a ring-shaped rotary part 8 configured to be fitted onto the rotary shaft 5, a ring-shaped magnet part 9 configured to be fitted onto the rotary part 8, and the impeller 6. The rotary part 8, the magnet part 9 and the impeller 6 uniformly form the rotor 7.
At a position in the housing 1 facing the magnet part 9, drive coils 10 configured to generate a magentic field to rotate the rotary shaft 5 are provided. Though not shown, four drive coils 10 are provided at predetermined angular intervals (e.g., 120°) in a rotational direction of the impeller 6. By sequentially controlling on and off of the four drive coils 10, the rotary shaft 5 is rotated.

Hereinafter, the rotor 7 will be described in detail.
The rotor 7 is formed of the magnet part 9 made of a resin material containing magnetic particles, and further formed therewith of the rotary part 8 and the impeller 6 made of resin. For example, the magnet part 9 is injection-molded using a mold into which permanent magnet is built in such a manner that a polar anisotropy magnetic field is generated. While the magnet part 9 is held in a half of the mold, the other half is replaced with another mold and the rotary part 8 and the impeller 6 are injection-molded. In this manner, the rotor 7 is made by two-color molding.

The magnet part 9 has polar anisotorpy in which north and south poles alternately appear in the circumferential direction and a line of magnetism is in a shape of an arc that enters the outer periphery and exits from the outer periphery (an arrow in the drawing), as shown in Fig. 3.
A cross-section of the outer periphery of the magnet part 9 is formed in a circular shape. A cross-section of the inner periphery of the magnet part 9 is formed in a rectanglar shape whose corner portions 12 are positioned at respective magnetism concentration portions 11 where magnetism are concentrated in the circumferential direction of the magnet part 9. Since the magnet part 9 has polar anisotropy in which four magnetism concentration portions 11 are present in the circumferential direction, the cross-section of the inner periphery thereof is formed in a rectangular shape having the same number of corner portions 12 as the number of the magnetism concentration portions 11.

In the magnet part 9, the line of magnetism is in a shape of an arc from a north pole in the outer periphery of the magnet part 9 to a south pole in the outer periphery of the magnet part 9 which is adjacent to the north pole in the circumferential direction. In the circumferential direction of the magnet part 9, the central region of the north pole and the central region of the south pole correspond to the magnetism concentration portions 11. In the magnetism concentration portion 11, the flux content is smaller on an inner periphery side of the magnet part 9, while the flux content is larger on an outer periphery side of the magnet part 9. Therefore, by forming a cross-section of the inner periphery of the magnet part 9 in a rectangular shape whose corner portions 12 are positioned at portions with a smaller flux content in the magnetism concentration portions 11, such a portion with a smaller flux content can be reduced. Accordingly, the weight of the magnet part 9 can be reduced while suppressing the decrease in the flux content.

The cross-section of the outer periphery of the rotary part 8 is formed in a polygonal shape which corresponds to the inner periphery of the magnet part 9, and the cross-section of the inner periphery of the rotary part 8 is formed in a circular shape.
Since the outer periphery of the rotary part 8 and the inner periphery of the magnet part 9 engage with each other, whirling of the magnet part 9 in the rotational direction relative to the rotary part 8 can be prevented.
In the rotary part 8, the portions corresponding to the corner portions 12 of the rectangular cross-section of the inner periphery of the magnet part 9 are thicker in radial direction than the remaining portions. If the thicknesses in the rotary part 8 differ to a large degree between the portions corresponding to the corner portions 12 of the rectangular corss section of the inner periphery of the magnet part 9 and the remaining portions, the rotary part 8 is likely to be affected by resin shrinkage after molding due to this difference in resin thickness. Specifically, in the vicinity of the corner portion 12, a distance from the rotary part 8 to the outer periphery of the magnet part 9 is short, and the resin in the vicinity of the corner portions 12 is externally cooled faster than the resin near the side portions between the corner portions 12 is, and thus an influence of resin shrinkage becomes large. As a result, when the resin shrinkage is larger, the roundness of the inner periphery of the rotary part 8 becomes poor. The term "roundness" herein means a value of a round portion corresponding to a radial difference (deviation) between two concentric geometric circles in the case where the distance therebetween becomes the minimum when the circles sandwich the round portion therebetween.

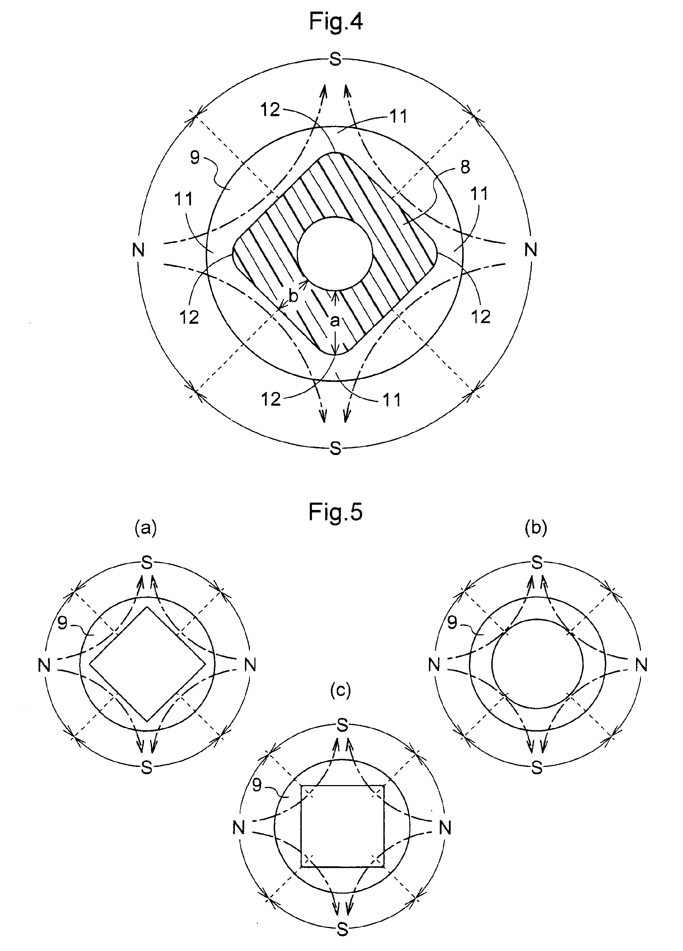

Therefore, in the present invention, the cross-section of the inner periphery of the magnet part 9 is not formed in a simple square, and as shown in Fig. 4, each corner portion 12 of the rectangle is formed in a shape of an arc which has a center on the inner side of the magnet part 9 and whose ends are contiguous to two sides of the rectangle adjacent to the corner portion. With this configuration, in the rotary part 8, there is prevented a large difference in thickness between the portions corresponding to the corner portions 12 of the rectangular cross-section of the inner periphery of the magnet part 9 and the remaining portions, and thus there is suppressed an influence of resin shrinkage due to difference in cooling conditions during molding caused by the difference in resin thickness.
Upon forming the corner portion 12 of the rectangle into an arc shape, it is preferable that a distance from the gravity center of the rectangle to a middle portion of each side of the rectangle is set above 5 mm, and that a radius of the arc of the corner portion 12 is set to 5 mm or less.

Hereinbelow, the effect of the electric pump rotor according to the present invention will be described based on experimental results.

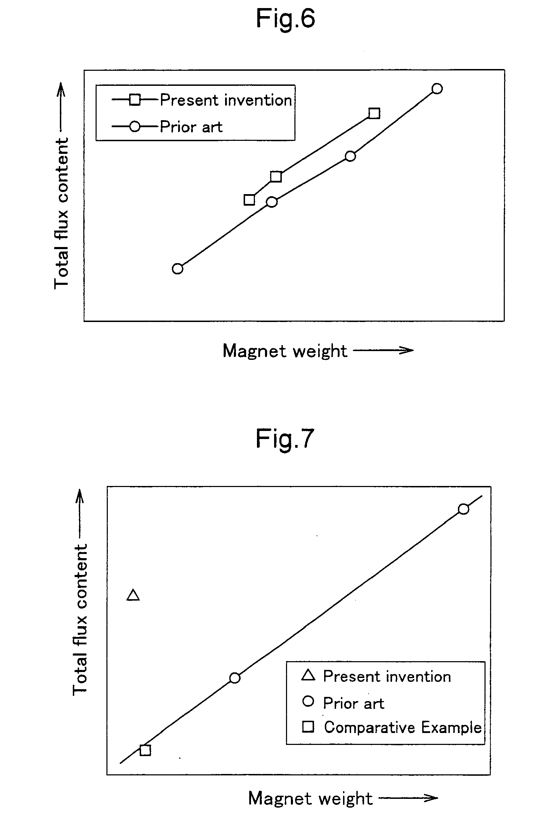

Fig. 6 is an experimental result showing relationships between magnet weight and total flux content, for the magnet part of the present invention (square mark in the graph) and the magnet part of the prior art (circle mark in the graph). In the magent part of the present invention, as shown in FIG.5(a), the cross-section of the inner periphery of the magent part is formed in a rectangular shape whose corner portions are positioned at the respective magnetism concentration portions. In the prior art magnet part, as shown in Fig. 5(b), the cross-section of the inner periphery of the magnet part is formed in a circular shape.
As is apparent from Fig. 6, the magnet part of the present invention (square mark in the graph) has a higher total flux content per magnet weight, as compared with the magnet part of the prior art (circle mark in the graph). While retaining the same level of the total flux content as that of the magnet part of the prior art, the weight of the magnet part of the present invention can be reduced. Accordingly, the weight of the magnet part can be reduced while suppressing the decrease in the flux content.

Fig. 7 is an experimental result showing relationships between magnet weight and total flux content, for the magnet part of the present invention (triangle mark in the graph), the magnet part of the prior art (circle mark in the graph) and the magnet part of Comparative Example (square mark in the graph). Like in the experiment shown in Fig. 6, the magnet part of the present invention used was one shown in Fig. 5(a), and the magnet part of the prior art used was one shown in Fig. 5(b). In Comparative example, as shown in Fig. 5(c), the cross-section of the inner periphery of the magnet part is formed in a rectangular shape whose corner portions are positioned at portions other than the magnetism concentration portions.
In general, when the magnet weight is reduced, the total flux content is also reduced accordingly. Therefore in Fig. 7, the total flux content in the prior art magnet part (circle mark in the graph), when the magnet weight is changed, is shown with a solid line. As is apprarent from Fig. 7, for the magnet part of Comparative Example (square mark in the graph), the total flux content per magnet weight is almost the same as that of the magnet part of the prior art (dotted line in the graph). On the other hand, it was observed that for the magnet part of the present invention (triangle mark in the graph), the total flux content per magnet weight is larger than that of the magnet part of the prior art (dotted line in the graph). Therefore, by forming a cross-section of the inner periphery of the magnet part in a polygonal shape, and at the same time, by positioning the corner portions thereof at the magnetism concentration portions, the weight of the magent part can be reduced while suppressing the decrease in the flux content.

In the present invention, in addition to the rectangular cross-section of the inner periphery of the magnet part, each corner portion of the rectangle is formed in a shape of an arc whose ends are contiguous to two sides of the rectangle adjacent to the corner portion. Hereinafter, it is discussed what radius is preferable for the arc-shaped corner portion.

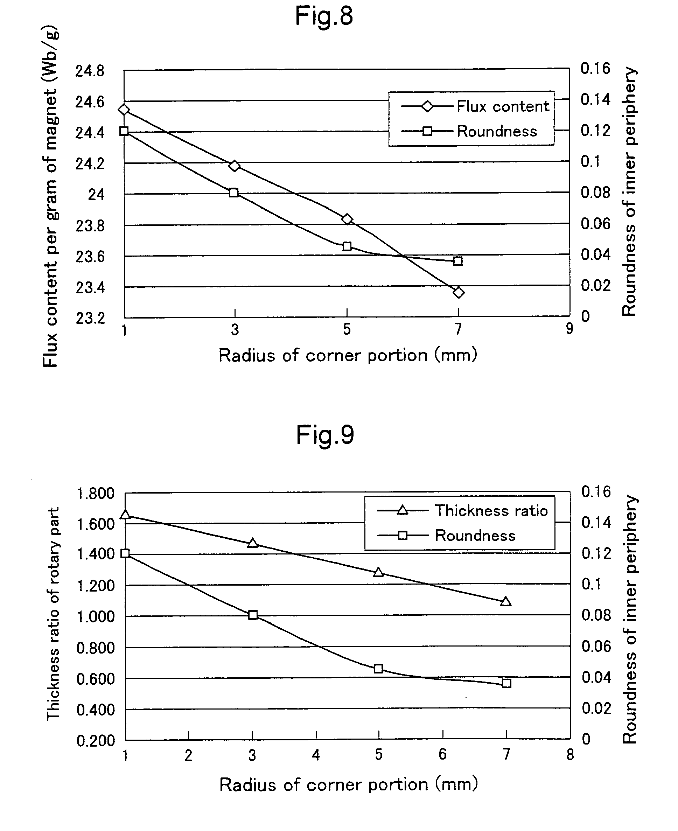

Fig. 8 is a graph showing changes in both flux content per gram of magnet (diamond mark in the graph) and roundness of the inner periphery of the magnet part (square mark in the graph), when the radius of the arc-shaped corner portion in the magnet part of the present invention is changed. Fig. 9 is a graph showing changes in both thickness ratio of rotary part (triangle mark in the graph) and roundness of the inner periphery of the magnet part (square mark in the graph), when the radius of the arc-shaped corner portion in the magnet part of the present invention is changed. The thickness ratio of the rotary part means, as shown in Figs. 3 and 4, a ratio (b/a) of a thickness (b) of a portion corresponding to a portion between the corner portions 12 to a thickness (a) of a portion corresponding to the corner portion 12.
In this case, the cross-section of the magnet part of the present invention is formed in a cylindrical shape having an outer diameter of 26 mm, an inner diameter of 16 mm, and a length (height) in an axial direction of 13 mm, with the inner periphery being formed in a square whose side has a length of 15.6 mm.

As is apparent from Fig. 8, when the raidus of the corner portion 12 becomes larger, the ineffecient portion of the magnet part 9 in terms of a magnetic flux increases, and thus a flux content per gram of magnet (Wb/g) decreases. On the other hand, when the radius of the corner portion 12 becomes larger, the value of roundness of the inner periphery of the rotary part 8 becomes smaller and thus a degree of precise circle increases. The reason for this seems to be that a larger radius of the corner portion 12 contributes to suppression of the difference in resin shrinkage during injection molding between the corner portions and the remaining portions of the rotary part 8. Therefore, it is considered that by improving the roundness of the inner periphery of the rotary part 8, the rotary part becomes not likely to be affected by resin shrinkage during injection molding.
As shwon in Figs. 8 and 9, when the radius of the corner portion 12 becomes 5 mm or larger, the thickness ratio of the rotary part 8 becomes smaller because of its shape, and a relative whirl-stop strength between the magnet part 9 and the rotary part 8 decreases and the inner periphery of the rotary part 8 is not improved. Accordingly, if a significance is placed on both the roundness of the inner periphery of the rotary part 8 and a relative whirl-stop strength between the magnet part 9 and the rotary part 8, it is found that the size of the radius of the corner portion 12 is preferably about 5 mm. Further, if a significance is placed solely on the relative whirl-stop strength between the magnet part 9 and the rotary part 8, the size of the radius of the corner portion 12 is preferably 5 mm or less.

Therefore, in the case where the cross-section of the magnet part is formed in a cylindrical shape having an outer diameter of 26 mm, an inner diameter of 16 mm, and a length (height) in an axial direction of 13 mm, with the inner periphery being formed in a square whose side has a length of 15.6 mm, by setting the radius of the corner portion to approximately 5 mm or not more than 5 mm, whirling of the magent part in the rotational direction relative to the rotary part can be firmly prevented, while the weight of the magnet part is reduced. In this case, the inner periphery of the magnet part is formed in a square whose side has a length of 15.6 mm, and thus a distance from the gravity center to the middle portion of each side is set above 5 mm. Accordingly, in the rectangle in which a distance from the gravity center to the middle portion of each side is set above 5 mm, it is preferable that each corner portion of the rectangle is made in an arc-shape having a radius of approximately 5 mm, or not more than 5 mm.

### (Other embodiments)

(1) In the above-described embodiment, the inner periphery of the magnet part 9 is formed in a rectanglar shape, and at the same time, each corner portion 12 of the rectanglar shape is formed in an arc shape. However, the inner periphery of the magnet part 9 may be formed simply in a recutangular shape.

(2) In the above-described embodiment, the cross-section of the inner periphery of the magnet part 9 is formed in a polygonal shape having the same number of the conter portions 12 as the number of the magnetism concentration portions 11. However, the polygonal shap may have a smaller number of the corner portions than the number of the magnetism concentration portions 11.

(3) In the above-described embodiment, the electric pump rotor according to the present invention is applied to a fluid pump. However, the present invention is not limited to the application to the fluid pump, and is applicable to other types of electric pump.

As described above, the present invention can be applied to various electric pump rotors having a ring-shaped magnet part with polar anisotropy in which north and south poles alternately appear in a circumferential direction, for the purpose of easily making the magnet part and at the same time for reducing the weight of the magnet part.

### Industrial Applicability

The present invention can be applied to various electric pump rotors and electric pumps.

## Claims

1. An electric pump rotor comprising a ring-shaped magnet part with polar anisotropy in which north and south poles alternately appear in a circumferential direction,
**characterized in that** a cross-section of an inner periphery of the magnet part is formed in a polygonal shape whose corner portions are positioned at magnetism concentration portions where magnetism is concentrated in a circumferential direction of the magnet part.

2. The electric pump rotor according to Claim 1, wherein
the magnet part is made of a resin material containing magnetic particles,
the rotor further comprises a rotary part made of resin formed by injection molding so as to be fitted into the magnet part, and
each corner portion of the polygonal shape is formed in a shape of an arc which has a center on an inner side of the magnet part and whose ends are contiguous to two sides of the polygonal shape adjacent to the corner portion.

3. The electric pump rotor according to Claim 2, wherein a distance from a gravity center of the polygonal shape to a middle portion of each side of the polygonal shape is set above 5 mm, and a radius of the arc in the corner portion of the polygonal shape is set to 5 mm or less.

4. The electric pump rotor according to any one of Claims 1 to 3, wherein the cross-section of the inner periphery of the magnet part is formed in a polygonal shape having the same number of the corner portions as the number of the magnetism concentration portions.

5. The electric pump rotor according to any one of Claims 1 to 4, wherein the magnetism concentration portion is positioned at central regions of the north pole and the south pole in a circumferential direction of the magnet part.

6. The electric pump rotor according to any one of Claims 1 to 5, wherein a cross-section of an outer periphery of the magnet part is formed in a circular shape.

7. The electric pump rotor according to any one of Claims 1 to 6, wherein a cross-section of an outer periphery of the rotary part is formed in a polygonal shape.

8. An electric pump comprising:
a suction port configured to take in a fluid;
a discharge port configured to discharge the fluid taken in from the suction port;
a fluid chamber communicating the suction port to the discharge port; and
a rotor comprising:
a ring-shaped magnet part with polar anisotropy in which north and south poles alternately appear in a circumferential direction; and
an impeller which is provided in the fluid chamber and is configured to rotate uniformly with the magnet part,
**characterized in that** a cross-section of an inner periphery of the magnet part is formed in a polygonal shape whose corner portions are positioned at magnetism concentration portions where magnetism is concentrated in a circumferential direction of the magnet part.
